# EUROPEAN PATENT SPECIFICATION

(11) **EP 2 520 203 B1**
(45) Date of publication and mention of the grant of the patent: **01.01.2014**
(21) Application number: 12165258.0
(22) Date of filing: 24.04.2012
(51) Int. Cl.: A47J 31/36

(54) **Apparatus for preparing a beverage starting from a powder material contained in a sealed cartridge**
Vorrichtung zur Herstellung eines Getränks, ausgehend vom Pulvermaterial in einer abgedichteten Kartusche
Appareil pour préparer une boisson à partir d'un matériau en poudre contenu dans une cartouche scellée

(30) Priority: 06.05.2011 IT MI20110773
(43) Date of publication of application: 07.11.2012
(73) Proprietor: STUDIO POLILLO S.a.s. di Corrente A. & C., 27100 Pavia (IT)
(72) Inventor: Polillo, Giampiero, 27100 Pavia (IT)
(74) Representative: Cicogna, Franco

(56) References cited:
- EP-A1- 2 044 867
- EP-A1- 2 077 087
- WO-A1-2008/096385
- WO-A1-2010/032271

## Description

### BACKGROUND OF THE INVENTION

The present invention relates to an apparatus for preparing a beverage starting from a powder material contained in a sealed cartridge.

More specifically, the present invention relates to an apparatus for preparing by infusion a coffee beverage starting from a coffee powder dose contained in a sealed cartridge, defined by a cup body closed at an end portion thereof by a bottom wall and, at the other end portion thereof by a sealing wall rigidly connected with an annular flange outside of the cup body.

It should be pointed out that the present apparatus is suitable to be used for percolating any beverages prepared supplying pressurized hot water through a powder material contained in any desired types of sealed cartridges.

In the coffee machine field is already known to use a coffee preparing machine including a pressurized hot water delivery element and a cup facing the delivery element and designed for housing therein a sealed rigid cartridge or capsule containing a single dose of powder coffee.

Several espresso coffee machines comprising a water tank, a water delivery pump and a boiler, a hot water supplying or feeding assembly and filter supporting means for housing a single-dose capsule or cartridge are already known.

The above mentioned espresso coffee machines require a cartridge or capsule loading and locating system for properly arranging the coffee capsule or cartridge in the filter holder.

Another problem to be solved is that of ejecting a used cartridge or capsule.

The machines in which the above operations are performed manually are dangerous and difficult to be operated by a user.

In fact, a manual arranging of the coffee capsule or cartridge in the infusion place represents a serious danger for the user fingers.

With respect to the withdrawing or ejecting of the used capsule, a further drawback should be pointed out.

In fact, if a user desires to prepare a coffee cup immediately after having prepared another coffee cup, he/she must wait some minutes to allow the coffee load to be properly cooled and handled, or it must be used dedicated tools, such as grippers, which renders this operation a very complex one.

In other coffee machines the used coffee cartridge ejection, and, if desired, a loading of a new capsule, are performed in an automatic manner, thereby the user must simply arrange a coffee cartridge at a machine cartridge inlet and operate said machine either by a motor driven means or by manually controlled implements.

The document WO 2008/096385 discloses substantially the preamble of Claim 1.

### SUMMARY OF THE INVENTION

Accordingly, the aim of the present invention is to provide an apparatus for preparing a beverage starting from a powder material contained in a sealed cartridge or capsule, including a loading and ejecting system for loading and ejecting a coffee powder cartridge which system is a fully automatic one, while being also adapted both for a motor driven operation and a manual operation.

Within the scope of the above mentioned aim, a main object of the invention is to provide such an apparatus comprising a coffee powder cartridge loading and unloading reliable device.

Another object of the present invention is to provide such an apparatus in which the cartridge loading and unloading device is very construction-wise simple.

Yet another object of the present invention is to provide such an apparatus which, owing to its specifically designed functional characteristics is very reliable and safe in operation.

According to one aspect of the present invention, the above mentioned aim and objects, as well as other objects, which will become more apparent hereinafter, are achieved by an apparatus for preparing a beverage starting from a powder material contained in a sealed cartridge, according to claim 1.

### BRIEF DESCRIPTION OF THE DRAWINGS

Further characteristics and advantages of the present invention will become more apparent hereinafter from the following detailed description of a preferred, though not exclusive, embodiment of the invention which is illustrated, by way of an indicative, but not limitative, example, in the accompanying drawings, where:
Figure 1 is a perspective view of the apparatus according to the present invention;

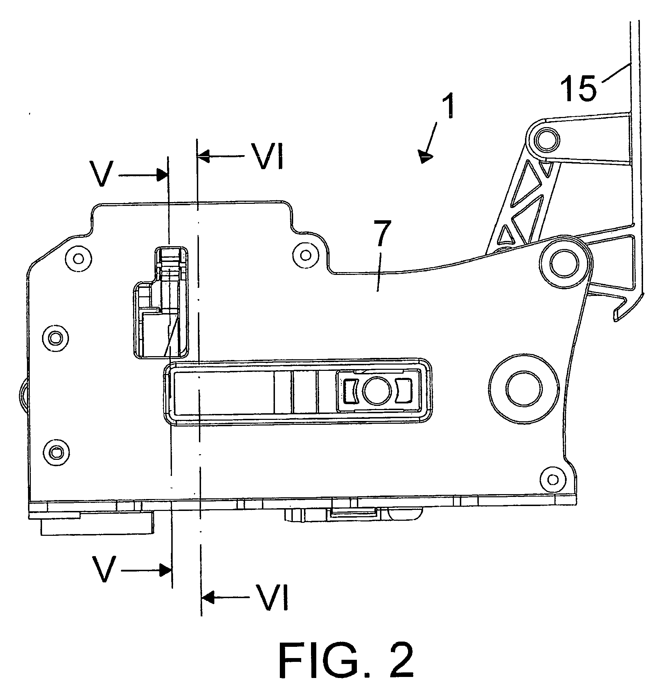

Figure 2 is a side elevation view of the apparatus according to the present invention;

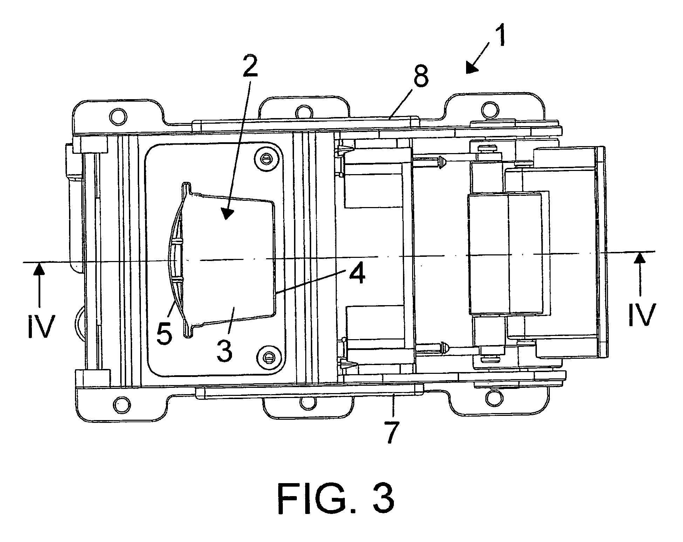

Figure 3 is a top plan view of the apparatus according to the present invention;
Figure 4 is a longitudinal cross-section view taken through the plane IV-IV of Figure 3;

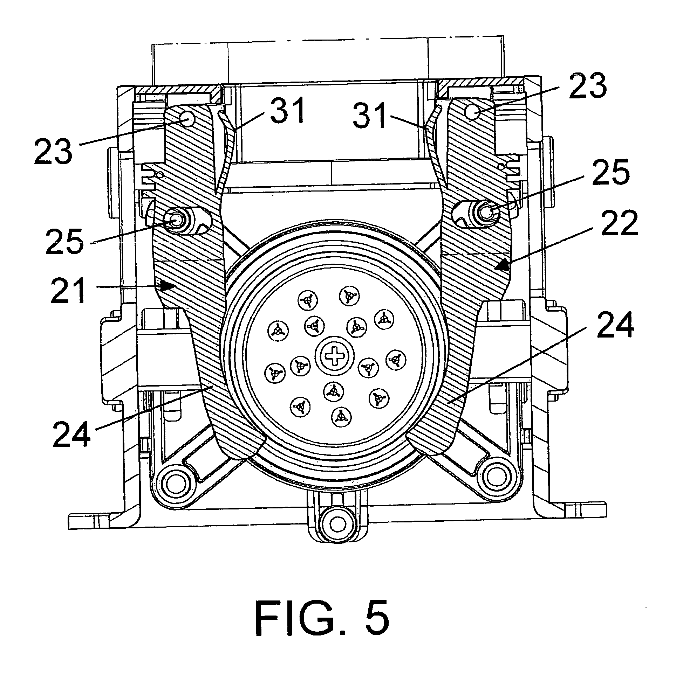

Figure 5 is a cross-sectional view taken through the plane V-V of Figure 2;

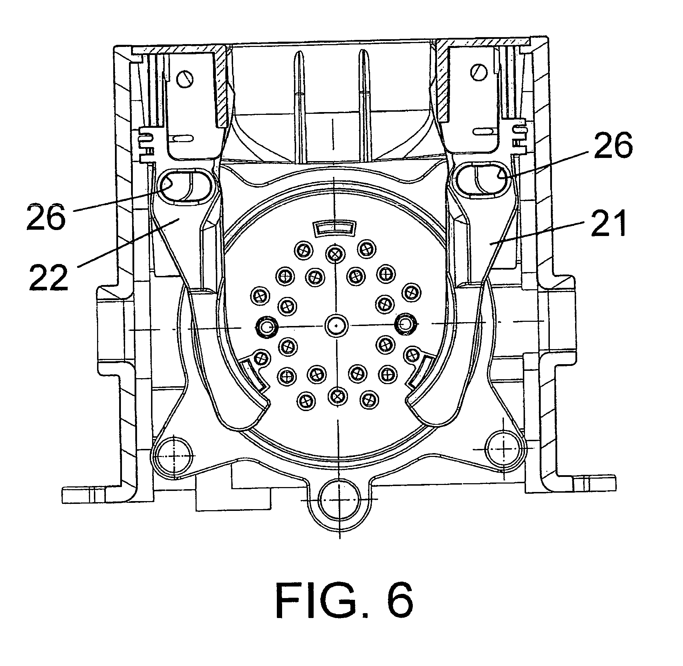

Figure 6 is a further cross-sectional view taken through the plane VI-VI of Figure 2;

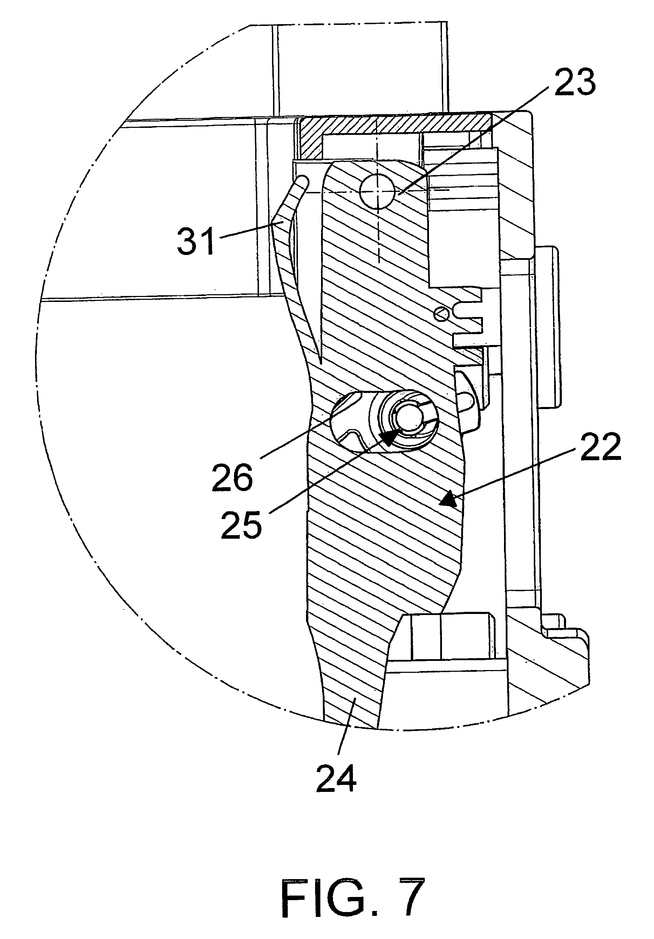

Figure 7 shows an enlarged detail of a jaw shown in Figure 5;
Figure 8 is a view corresponding to a cross-section taken through the plane V-V of Figure 2, but showing a further embodiment of the jaws;
Figure 9 is a view corresponding to the VI-VI cross-section of Figure 2, but showing yet another embodiment of the jaws;
Figure 10 is a view corresponding to the V-V cross-section of Figure 2, but showing a third embodiment of the jaws;
Figure 11 is a view corresponding to the VI-VI cross-section of Figure 2, but showing a third embodiment of the jaws;
Figures 12 and 13 are respectively front views of the first embodiment of the jaws, shown in two operating steps for handling the cartridge;
Figures 14 and 15 are respectively front views of the second embodiment of the jaws, shown in two cartridge handling operating steps;
Figures 16 and 17 are respectively front views of the third embodiment of the jaws, shown in two further cartridge handling operating steps;
Figure 18 is a top plan view schematically showing the cartridge loading and unloading device according to a first operating step;

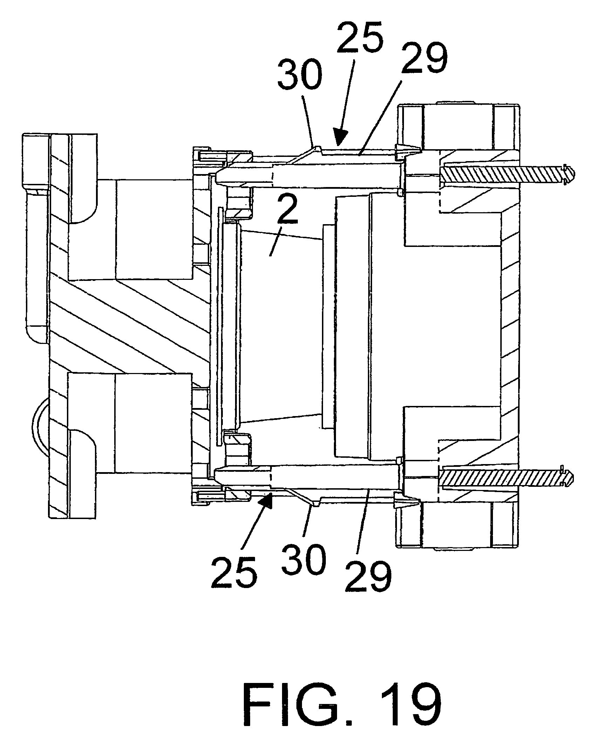

Figure 19 is a view similar to Figure 18, but showing a following operating step;
Figure 20 is a view similar to Figure 19, but showing yet another following operating step;
Figure 21 is a view similar to Figure 20, but showing yet another following operating step;

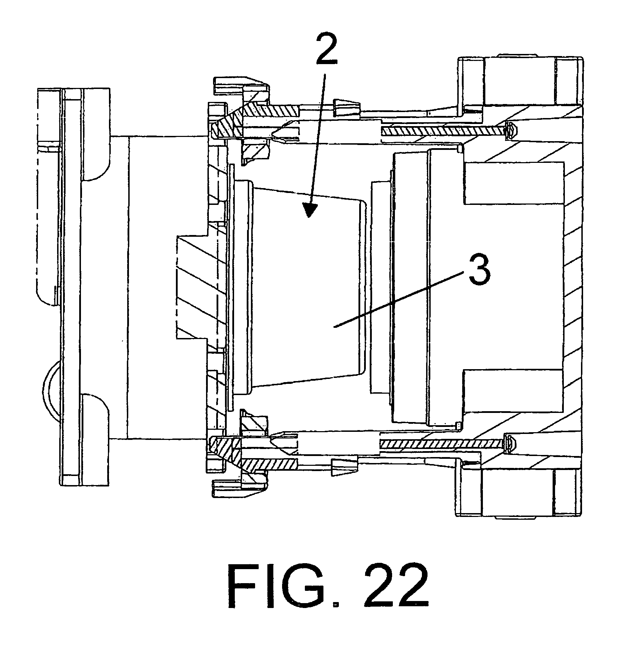

Figure 22 is a view similar to Figure 21, but showing yet another following operating step; and

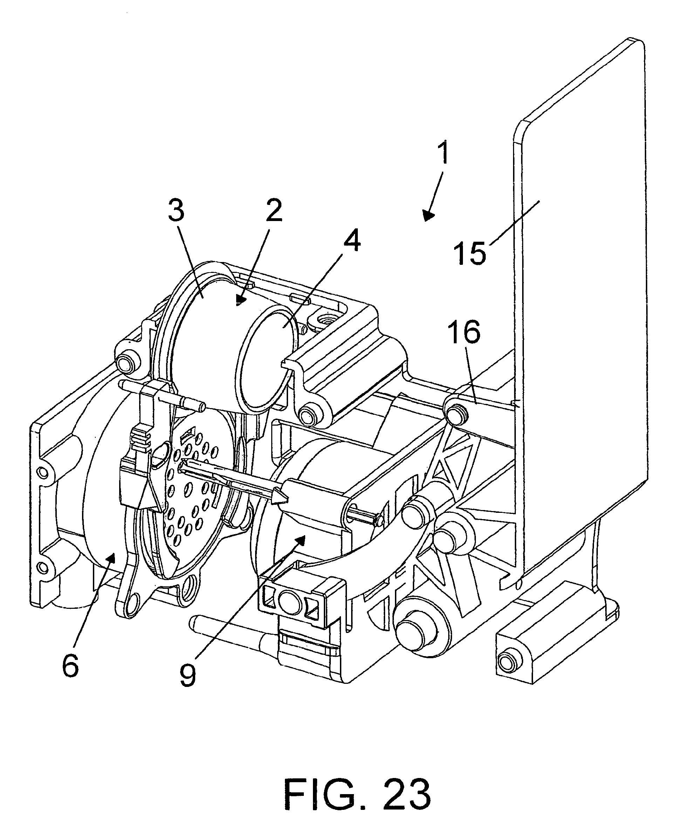

Figure 23 is a broken-away perspective view of the apparatus according to the present invention.

### DESCRIPTION OF THE PREFERRED EMBODIMENTS

With reference to the number references of the above mentioned figures, the apparatus according to the present invention, which has been generally indicated by the reference number 1, has been designed for preparing a beverage starting from a powder material contained in a sealed cartridge or capsule 2, of a type conventionally used in espresso coffee preparing machines.

More specifically, the sealed cartridge 2 comprises a cup body made of a thermoplastic material and having a side wall 3, of a frustum of cone configuration, including a bottom wall 4 and a sealing wall 5, usually constituted by a metal or metalized film material.

The apparatus 1 shown in the figures extends along a middle horizontal axis, and comprises a framework consisting of two half-shells 7 and 8, which enclose therebetween a hot pressurized water delivery assembly 6, being fed or supplied from a water boiler, not shown in the figures, designed for receiving pressurized water from a pump withdrawing water from a water tank.

The delivery assembly 6 comprises a shower element or assembly, adapted to receive pressurized hot water from said water boiler.

The shower element is arranged in a movable position coaxial with the middle axis of the apparatus and being movable between a withdrawn rest position and a projecting percolating position.

The delivery assembly 6 comprises a perforating device, including a plurality of perforating needles 11, which are rigid with the front wall and arranged about a central hole, to project from the front wall toward the shower element, being aligned with the holes of the shower element.

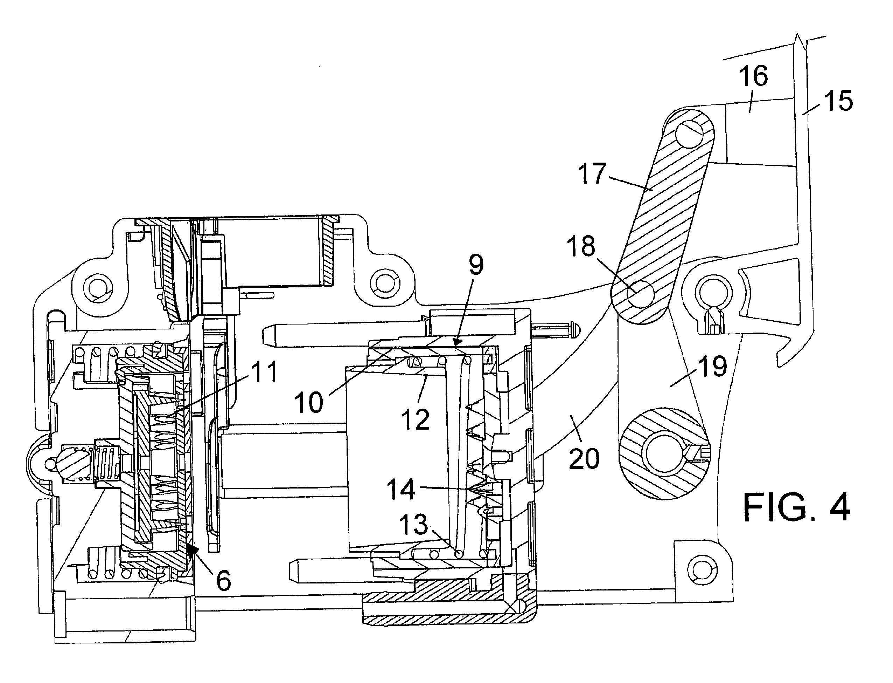

The length of the needles 11 and thickness of the shower element front wall are so designed that, with the shower element being arranged at its projecting position, said needles 11 will be arranged inside the respective holes, as shown in Figure 4.

As the shower element or assembly is brought to its withdrawn position, said needles 11 will partially project from the wall toward the sealing walls 5 of the cartridge in a percolating position thereof.

The apparatus 1 according to the invention further comprises, in addition to the delivery assembly 4, a percolating assembly 9 facing the delivery assembly 6 and comprising, in turn, a percolating cup 10.

Said percolating cup is adapted to house therein, at least partially, a cartridge 2 and comprises a discharging or outlet duct formed in the body of the percolating assembly 9.

The percolating assembly 9 is movable along the middle or central axis of the apparatus framework, between at least two operating positions: a loading position thereat the percolating cup 10 is spaced at a distance from the delivery assembly 6 and a delivery position, thereat the percolating cup 10 closes the cartridge 2 between itself and the delivery assembly.

Said percolating cup 10 comprises an inner bush 12 which is axially movable under a biasing or urging spring 13, thereby holding the cartridge 2 in a cartridge position partially projecting from the percolating cup, with said percolating cup not abutting on the delivery assembly 6.

Said percolating cup 10 comprises moreover a further perforating device, including a plurality of perforating needles 14, which are adapted to perforate, in operation, the bottom wall 4 of the cartridge 2, outward deformed by the delivered pressurized hot water entering the cartridge, thereby the percolated coffee will exit the cartridge 2 and arrive, through a plurality of throughgoing holes formed in said needles 14, at a discharging duct of said percolating cup 10.

The horizontal movement of the percolating assembly 9 is driven by a linear actuator consisting of a leverage manually operated through an outer handle 15, which latter is pivoted to the apparatus framework and comprises an arm 16 in turn pivoted to a lever 17 having its other end portion pivoted to a crank pin 18 of a crank 19.

The crank pin 18 is pivoted to a head portion of a connecting rod 20, the foot portion of which is associated with the percolating assembly 9 thereby driving the latter.

In the handle opened or raised condition, as shown in Figure 4, the percolating assembly 9 is arranged at a loading position, thereat the percolating cup 10 is located at a distance from the delivery assembly 6.

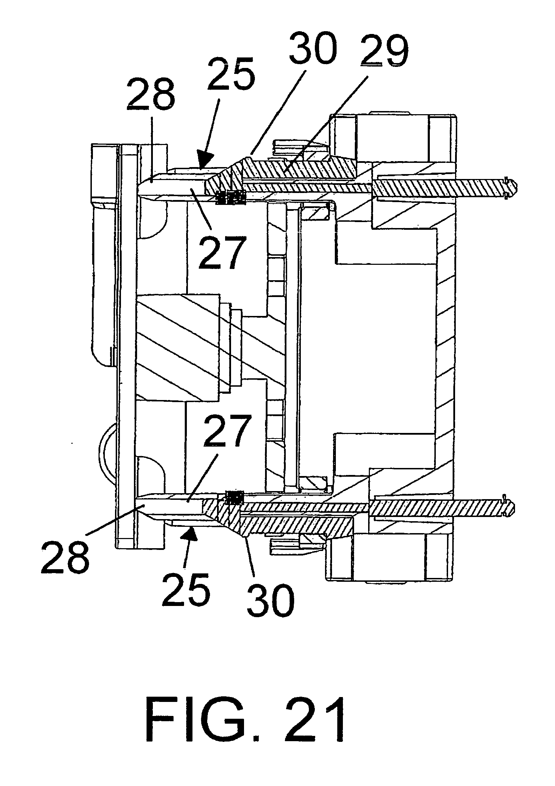

In the closed, or lowered, handle condition, on the other hand, the percolating assembly 9 is arranged at a delivery position, thereat the percolating cup 10 closes the cartridge 2 between said percolating cup 10 and delivery assembly, as schematically shown in Figure 21.

According to the present invention, the apparatus further comprises a cartridge loading and unloading device, consisting of a pair of jaws 21 and 22 adapted to grip and restrain a cartridge 2 at an infusion position during the infusion operation, and to discharge or eject said cartridge, at the end of the infusion operation, to provide a free space to receive a new cartridge therein.

Said jaws are symmetrical with respect to one other and each jaw comprises a top end portion 23, pivoted to the apparatus framework, and e free end portion 24.

Each jaw is pivoted about a longitudinal axis, parallel to the longitudinal middle or central axis of the apparatus.

The inner part of the free end portion 24 is so contoured as to abut against the conical sidewall 3 of the cartridge 2.

Said jaws 21 and 22 define, by swinging about their pivot axis, the above mentioned jaw open position and jaw closed position.

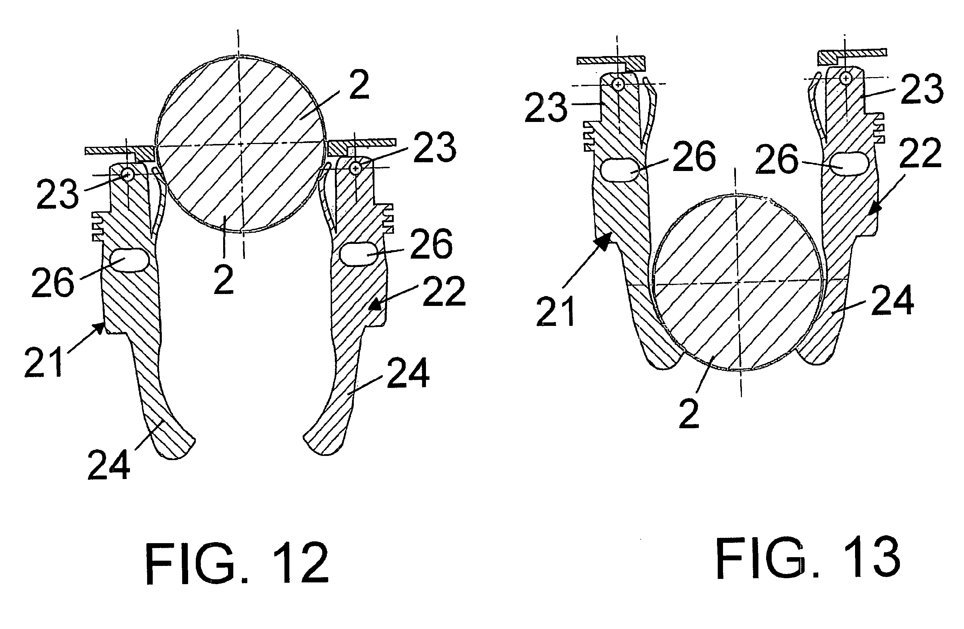

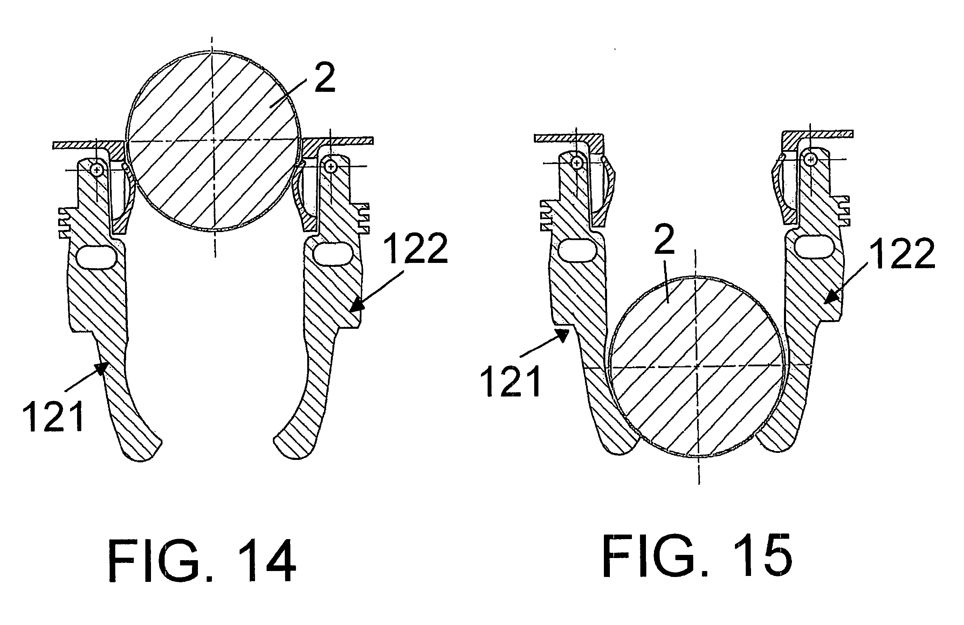

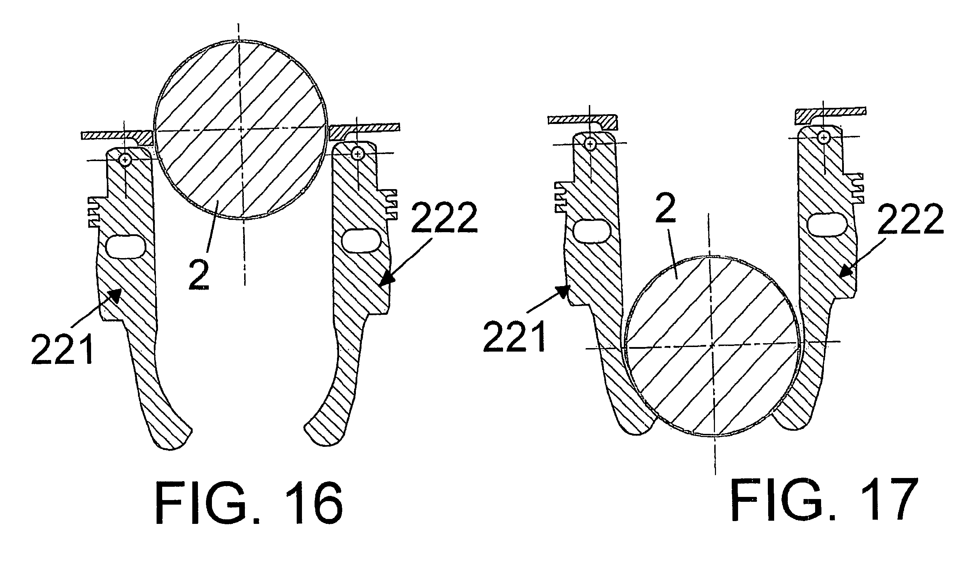

In the jaw closed position, said jaws will restrain a cartridge 2 therebetween, as shown in Figures 13, 15 and 17, whereas in their open position, said jaws will be spread apart so as to allow the cartridge 2 to downward fall.

The movement of the jaws between the two above mentioned closed and open positions is controlled by telescopic cam elements 25, engaging in engagement slots 26 formed on each said jaw 21 and 22.

Each said cam element 25 consists of a main cam element 27, including a tapering tip 28, and a telescopic cam element 29 sliding in the main element 27.

Said telescopic element 29 comprises a telescopic element tooth 30 facing outward and including a front tip portion.

Thus, the tooth 30 allows the telescopic element 29 to facilitate the telescopic cam in entering the slot 26, during the feeding step, while slowing down the exiting movement of said cam during its return operating step.

In fact, during the closing movement of the percolating assembly 9, that is as the percolating assembly is driven from its loading position, thereat the percolating cup 10 is arranged at a distance from the delivery assembly 6, to the delivery position, thereat the percolating cup 10 closes the cartridge 2 between itself and the delivery assembly, said telescopic cams 25, being rigid with said percolating assembly 9, will enter the slots 26 thereby spreading apart the jaws 21 and 22 to bring them to their loading position.

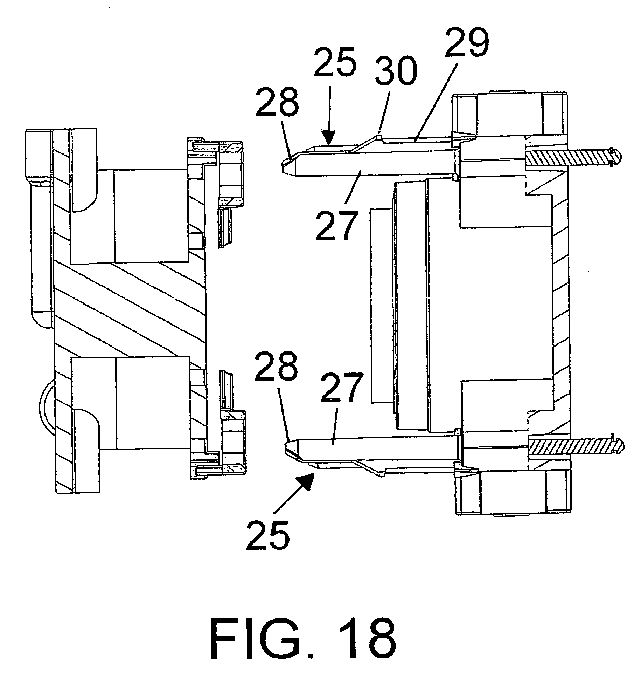

Figures 18 and 21 schematically show the above driving movement.

As said percolating assembly performs its return movement, the telescopic cams 25 disengage from the sots 26 to cause the jaws 21, 22 to return to their cartridge locking closed position.

In this return movement, the telescopic elements are held for a distance by the teeth 30 engaging or latching on the jaws surfaces about the slots 26 thereby said jaws will be spread apart to allow the percolating assembly 9 to fully return to its starting loading position.

As shown, each said jaws 21 and 22 comprises moreover a restraining resilient element comprising, in this embodiment, a restraining spring 31 formed as a single body with the respective jaw, on the inner side of the latter.

The two springs 31 restrain the cartridge 2 at an insertion position, as shown in Figure 12, thereby a small pressure will resiliently deform said springs thereby causing the cartridge 2 to fall to a gripping position, as shown in Figure 13.

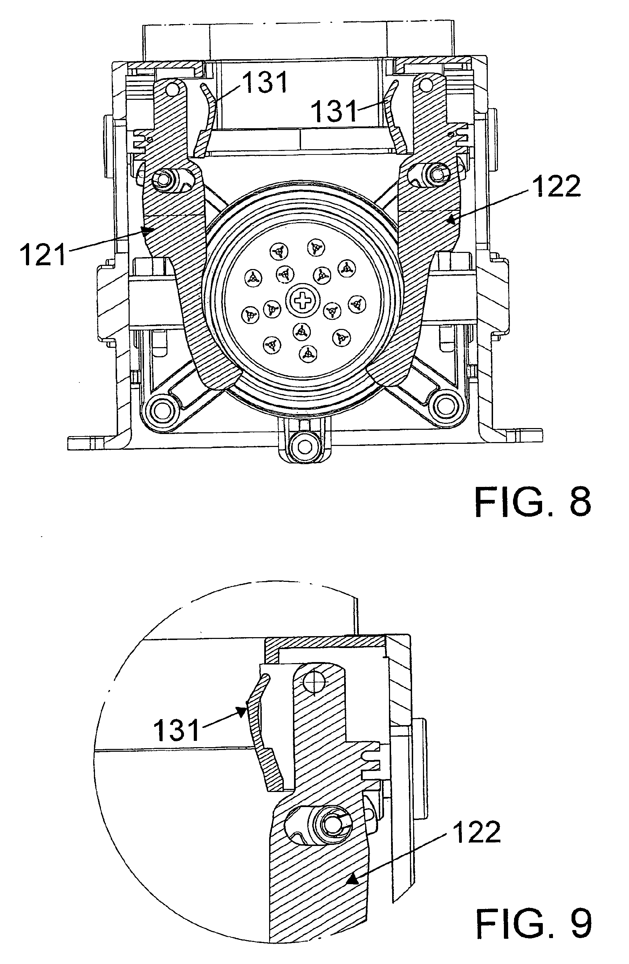

Figures 8, 9, 14 and 15 show a modified embodiment of said springs.

In this modified embodiment, the jaws, herein indicated by the reference numbers 121 and 122, are identical to the thereinabove disclosed jaws 21 and 22, with the exception that the springs 131 are separated from the jaw body.

The operation of the jaws 121 and 122 is identical to that of the jaws 21 and 22 and, even in this case, the springs 131 operate as a temporary restraining element for temporarily restraining the cartridge before pushing the latter to its gripping position.

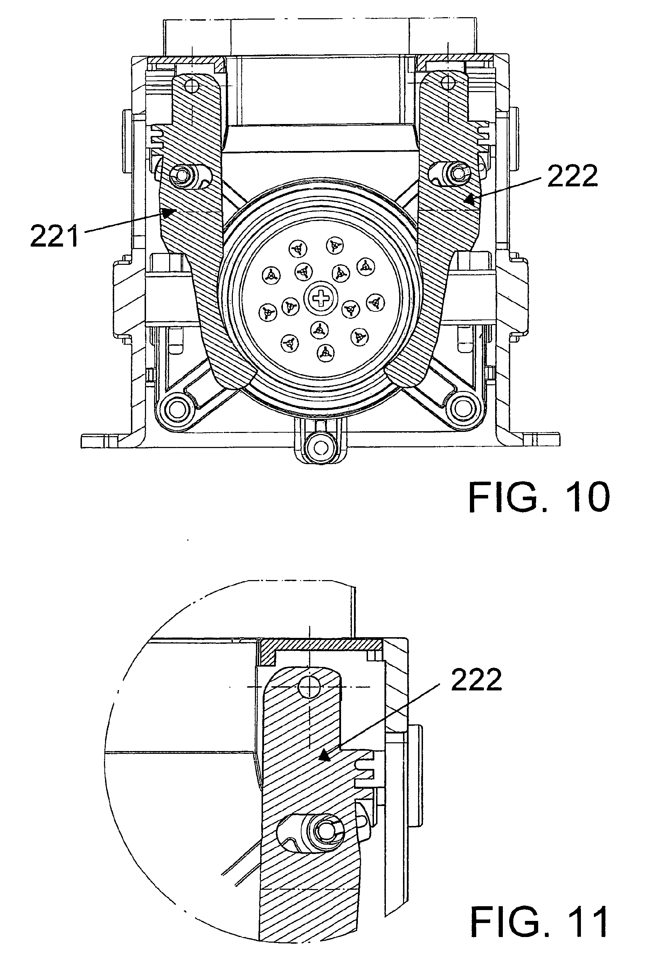

Figures 10, 11, 16 and 17 show yet another modified embodiment of the jaws, herein indicated by the reference numbers 221 and 222, which jaws do not comprise the restraining springs.

In this embodiment, the cartridge 2 is caused to fall between the gripping jaws at a gripping position thereof, the jaws being not restrained as in the preceding embodiments.

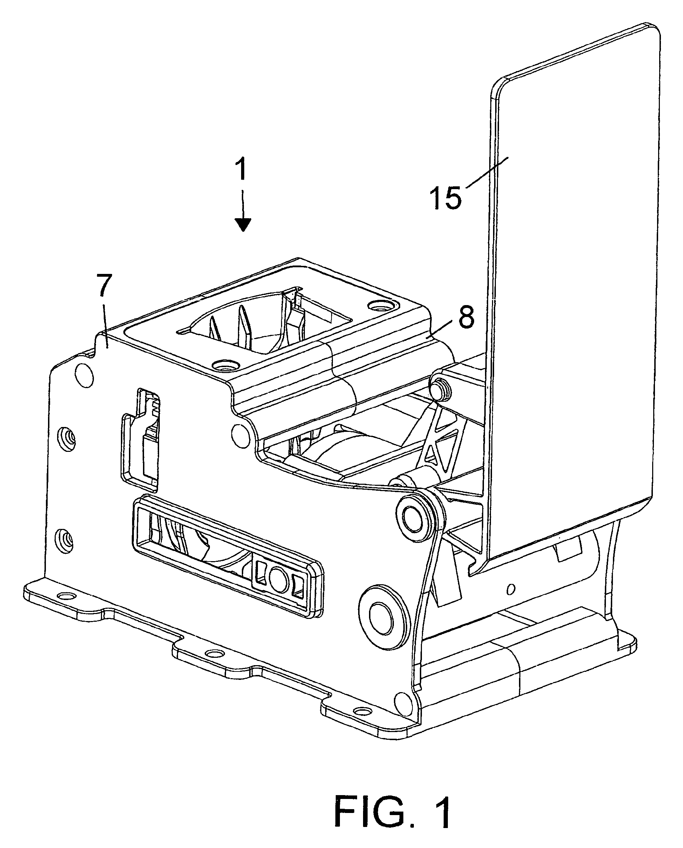

In operating the apparatus according to the present invention, the operating cycle is started, with the handle 15 at an open position thereof, as shown in Figures 1 and 4, by inserting a cartridge 2 between the jaws 21 and 22 in their closed position.

This condition is schematically shown in Figures 13, 15 and 17 and corresponds to the percolating assembly 9 loading position, thereat the percolating cup 10 is spaced at a distance from the delivery assembly 6.

Thus, by operating the handle 15, the percolating assembly 9 is displaced toward the delivery assembly thereby causing the telescopic cams 25 to be engaged in the slots 26 of the jaws so as to spread apart said jaws.

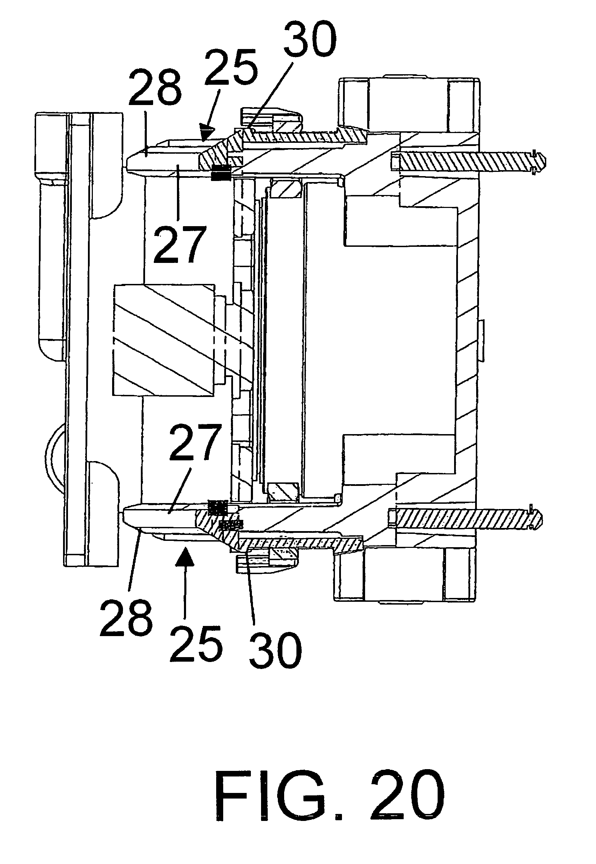

The telescopic cams 25 are so contoured that the spreading apart of the jaws is performed only with the cartridge 2 arranged at its percolating position, between the percolating assembly 9 and delivery assembly 6 (see Figures 20 and 21).

In this position, the shower element or assembly contacts the cartridge 2 to perforate the sealing wall 5 by the perforating needles 11 entering the cartridge 2.

Then, pressurized hot water is delivered through the cartridge 2 to outward deform the bottom wall 4 and causing the needles to perforate the cartridge, and the beverage to percolate through the needles 14 and outlet duct of the percolating assembly.

At the end of a coffee cup preparing operation, the user, as he/she desires to prepare another coffee cup or remove from the apparatus 1 the used cartridge 2, operates the handle 15 to move away the percolating assembly 9 from the delivery assembly 6.

In this operating step, the percolating assembly 9 causes the telescopic cams 25 to disengage from the jaw slots, thereby the jaws are spread apart to allow the cartridge 2 to fall therefrom.

As disclosed, said jaws are held in a spread apart condition during a substantial part of the percolating assembly return movement, thereby allowing the cartridge to properly downward fall.

The spread apart extended condition, in particular, is assured by the fact that, as the telescopic cams 25 disengage from the slot 26, the telescopic elements are restrained for a time by the restraining teeth 30 engaging or latching with the surfaces of the jaws about the slots 26, to hold said jaws spread apart up to a return of the percolating assembly 9 to its starting loading position.

At this time, the apparatus will be ready again to receive a novel cartridge for a novel infusion operation.

It has been found that the invention fully achieves the intended aim and objects.

In fact, the invention has provided an apparatus for preparing beverages starting from a powder material contained in a sealed cartridge, which comprises a fully automatic cartridge loading and unloading system which is very simple and reliable.

The cartridge loading and unloading system is suitable for both a motorized and a manual operation.

In practicing the invention, the used materials, as well as the contingent size and shapes can be any, depending on requirements.

## Claims

1. An apparatus (1) for preparing a beverage starting from a powder material contained in a sealed cartridge (2), said apparatus (1) comprising an apparatus framework (7, 8) in which are arranged a pressurized hot water delivering assembly (6) and a percolating assembly (9) facing the water delivering assembly (6); said percolating assembly (9) being movable between at least two operating positions: a loading position thereat said percolating assembly (9) is arranged at a distance from the delivering assembly (6) and a delivery position thereat said percolating assembly (9) encloses said cartridge (2) between said percolating assembly (9) and delivering assembly (6); said apparatus comprising moreover a cartridge loading and unloading device including a pair of jaws (21, 22) adapted to held the cartridge (2) at an infusion position and to discharge said cartridge at the end of the infusion to provide a space for a new cartridge, **characterized in that** said jaws are driven from an unloading spread apart position to a cartridge (2) restraining closed position by telescopic cams (25) associated with said percolating assembly (9).

2. An apparatus, according to claim 1, **characterized in that** said jaws (21, 22) are symmetrical and each said jaw (21, 22) comprises a top end portion, pivoted to said apparatus framework (7, 8), and a free portion, each said jaw (21, 22) being pivoted about a longitudinal axis parallel to an apparatus longitudinal middle axis; said free end portion having an inner part in abutment against a side wall of the cartridge (2).

3. An apparatus, according to claim 1, **characterized in that** said jaws (21, 22) comprise jaw slots (26) therein said telescopic cams (25) are so engaged as to cause said jaws (21, 22) to be moved away from one another and toward one another or closed.

4. An apparatus, according to claim 3, **characterized in that** each said telescopic cam (25) comprises a main cam element (27) including a tapering tip (28) and a telescopic member (29) slidable in the main cam element (27), said telescopic member (29) including an outward facing tooth (30) and a front tip, said tooth (30) allowing said telescopic member (29) to facilitate an engaging of said telescopic cam (25) in said slot (26), during an advancing movement, while hindering a disengaging from said slot (26) during a return movement of said telescopic cam (25).

5. An apparatus, according to one or more of the preceding claims, **characterized in that** each said jaw (21, 22) comprises a temporary restraining resilient element (31) for temporarily resiliently restraining said cartridge (2).

6. An apparatus, according to claim 5, **characterized in that** said temporary restraining resilient element (31) comprises a spring member (32) formed in a single body with the jaw (21, 22) on an inner side of said jaw.

7. An apparatus, according to claim 5, **characterized in that** said temporary restraining resilient element (31) is separated from the jaw (21, 22) body.

8. An apparatus, according to one or more of the preceding claims, **characterized in that** said apparatus comprises a driving mechanical leverage, which is manually driven through an outer handle (15), for in turn horizontally driving said percolating assembly (9).

9. An apparatus, according to claim 8, **characterized in that** said outer handle (15) is pivoted to the apparatus framework (7, 8) and comprises a handle arm (15) in turn pivoted to a lever (17) having an end portion pivoted to a crank pin (18), said crank pin (18) being in turn pivoted to a head portion of a connecting rod (20) the foot portion of which is operatively associated with said percolating assembly (9).

## Patentansprüche

1. Apparat (1) zur Herstellung eines Getränks, ausgehend von einem Pulvermaterial, das in einer versiegelten Patrone (2) enthalten ist, wobei der Apparat (1) ein Apparatgestell (7, 8) umfasst, in dem eine unter Druck gesetzte Heißwasserzulieferbaugruppe (6) und eine Perkolierbaugruppe (9), die der Wasserzulieferbaugruppe (6) gegenüberliegt, angeordnet sind; wobei die Perkolierbaugruppe (9) zwischen mindestens zwei Betriebspositionen beweglich ist: einer Ladeposition an der die Perkolierbaugruppe (9) in einem Abstand von der Zulieferbaugruppe (6) angeordnet ist, und einer Zulieferposition, an der die Perkolierbaugruppe (9) die Kartusche (2) zwischen der Perkolierbaugruppe (9) und der Zulieferbaugruppe (6) einschließt; wobei der Apparat außerdem ein Kartuschelade- und -ausladevorrichtung, einschließlich eines Paars Klemmbacken (21, 22) umfasst, die geeignet sind, die Kartusche (2) an einer Infusionsposition zu halten und die Kartusche am Ende der Infusion auszuladen, um Platz für eine neue Kartusche bereitzustellen, **dadurch gekennzeichnet, dass** die Klemmbacken von einer auseinandergespreizten Ausladeposition zu einer geschlossenen Rückhalteposition der Kartusche (2) durch teleskopische Nocken (25) getrieben werden, die mit der Perkolierbaugruppe (9) assoziiert sind.

2. Apparat nach Anspruch 1, **dadurch gekennzeichnet, dass** die Klemmbacken (21, 22) symmetrisch sind und jede Klemmbacke (21, 22) einen oberen Endabschnitt, der zum Apparatgestell (7, 8) geschwenkt wird, und einen freien Abschnitt umfasst, wobei jede Klemmbacke (21, 22) um eine Längsachse parallel zu einer mittleren Apparatlängsachse geschwenkt wird; wobei der freie Endabschnitt ein Innenteil aufweist, das gegen eine Seitenwand der Kartusche (2) anstößt.

3. Apparat nach Anspruch 1, **dadurch gekennzeichnet, dass** die Klemmbacken (21, 22) Klemmbackenschlitze (26) umfassen, worin die teleskopischen Nocken (25) so eingerastet werden, dass die Klemmbacken (21, 22) dazu gebracht werden, von einander weg und aufeinander zu bewegt oder geschlossen zu werden.

4. Apparat nach Anspruch 3, **dadurch gekennzeichnet, dass** jede teleskopische Nocke (25) ein Hauptnockenelement (27) umfasst, das eine sich verjüngende Spitze (28) und ein teleskopisches Teil (29) umfasst, das in dem Hauptnockenelement (27) gleitfähig ist, wobei das teleskopische Teil (29) einen nach außen gerichteten Zahn (30) und eine vordere Spitze umfasst, wobei der Zahn (30) es gestattet, dass das teleskopische Teil (29) ein Einrasten der teleskopischen Nocke (25) in den Schlitz (26) während einer Vorwärtsbewegung ermöglicht, während ein Freiwerden aus dem Schlitz (26) während einer Rückbewegung der teleskopischen Nocke (25) verhindert wird.

5. Apparat nach einem oder mehreren der vorhergehenden Ansprüche, **dadurch gekennzeichnet, dass** jede Klemmbacke (21, 22) ein zeitweiliges federndes Rückhalteelement (31) zum zeitweiligen federnden Zurückhalten der Kartusche (2) umfasst.

6. Apparat nach Anspruch 5, **dadurch gekennzeichnet, dass** das zeitweilige federnde Rückhaltelement (31) ein Federteil (32) umfasst, das als einheitlicher Körper mit der Klemmbacke (21, 22) an einer Innenseite der Klemmbacke gebildet ist.

7. Apparat nach Anspruch 5, **dadurch gekennzeichnet, dass** das zeitweilige federnde Rückhaltelement (31) von dem Klemmbacken- (21, 22) Körper getrennt ist.

8. Apparat nach einem oder mehreren der vorhergehenden Ansprüche, **dadurch gekennzeichnet, dass** der Apparat eine mechanische Treibhebelanordnung umfasst, die manuell durch einen äußeren Griff (15) angetrieben wird, um wiederum die Perkolierbaugruppe (9) horizontal anzutreiben.

9. Apparat nach Anspruch 8, **dadurch gekennzeichnet, dass** der äußere Griff (15) zum Apparatgestell (7,8) gedreht wird und einen Griffarm (15) umfasst, der wiederum auf einen Hebel (17) zu gedreht wird, der einen Endabschnitt aufweist, der auf einen Kurbelzapfen (18) zu gedreht wird, wobei der Kurbelzapfen (18) wiederum auf einen Kopfabschnitt einer Verbindungsstange (20) zu gedreht wird, deren Fußteil operativ mit der Perkolierbaugruppe (9) assoziiert ist.

## Revendications

1. Appareil (1) pour préparer une boisson à partir d'un matériau en poudre contenu dans une cartouche scellée (2), ledit appareil (1) comprenant un bâti (7, 8) d'appareil dans lequel sont agencés un ensemble de distribution d'eau chaude sous pression (6) et un ensemble percolateur (9) qui fait face à l'ensemble de distribution d'eau (6) ; ledit ensemble percolateur (9) pouvant se déplacer entre au moins deux positions de fonctionnement : une position de chargement dans laquelle ledit ensemble percolateur (9) est agencé à distance de l'ensemble de distribution (6) et une position de distribution dans laquelle ledit ensemble percolateur (9) contient ladite cartouche (2) entre ledit ensemble percolateur (9) et l'ensemble de distribution (6) ; ledit appareil comprenant de plus un dispositif de chargement et de déchargement de la cartouche incluant une paire de mâchoires (21, 22) conçues pour maintenir la cartouche (2) dans une position d'infusion et pour évacuer ladite cartouche à la fin de l'infusion afin de fournir un espace pour une nouvelle cartouche, **caractérisé en ce que** lesdites mâchoires sont entraînées depuis une position écartée d'évacuation vers une position fermée de retenue de cartouche (2) par des cames télescopiques (25) associées au dit ensemble percolateur (9).

2. Appareil selon la revendication 1, **caractérisé en ce que** lesdites mâchoires (21, 22) sont symétriques et **en ce que** chaque mâchoire (21, 22) comprend une portion d'extrémité supérieure, qui pivote par rapport au dit bâti (7, 8) de l'appareil, et une portion libre, chaque dite mâchoire (21, 22) pivotant autour d'un axe longitudinal parallèle à un axe longitudinal médian de l'appareil ; ladite portion d'extrémité libre ayant une partie interne qui bute contre une paroi latérale de la cartouche (2).

3. Appareil selon la revendication 1, **caractérisé en ce que** lesdites mâchoires (21, 22) comprennent des fentes de mâchoires (26) dans lesquelles lesdites cames télescopiques (25) sont engagées de manière à provoquer le déplacement desdites mâchoires (21, 22) l'une loin de l'autre et l'une vers l'autre ou leur fermeture.

4. Appareil selon la revendication 3, **caractérisé en ce que** chaque came télescopique (25) comprend un élément de came principal (27) incluant un embout conique (28) et un élément télescopique (29) pouvant coulisser dans l'élément de came principal (27), ledit élément télescopique (29) incluant une dent orientée vers l'extérieur (30) et un embout avant, ladite dent (30) permettant au dit élément télescopique (29) de faciliter un engagement de ladite came télescopique (25) dans ladite fente (26), au cours d'un mouvement d'avancée, tout en faisant obstacle à un dégagement de ladite fente (26) au cours d'un mouvement de retour de ladite came télescopique (25).

5. Appareil selon l'une ou plusieurs des revendications précédentes, **caractérisé en ce que** chaque dite mâchoire (21, 22) comprend un élément élastique de retenue temporaire (31) permettant de retenir temporairement ladite cartouche (2).

6. Appareil, selon la revendication 5, **caractérisé en ce que** ledit élément élastique de retenue temporaire (31) comprend un élément de ressort (32) composé d'un seul corps avec la mâchoire (21, 22) sur un côté interne de ladite mâchoire.

7. Appareil selon la revendication 5, **caractérisé en ce que** ledit élément élastique de retenue temporaire (31) est séparé du corps de la mâchoire (21, 22).

8. Appareil selon l'une ou plusieurs des revendications précédentes, **caractérisé en ce que** ledit appareil comprend un levier mécanique d'entraînement qui est entrainé manuellement par l'intermédiaire d'une poignée extérieure (15), afin d'entraîner à son tour horizontalement ledit ensemble percolateur (9)

9. Appareil selon la revendication 8, **caractérisé en ce que** ladite poignée extérieure (15) pivote par rapport au bâti de l'appareil (7, 8) et comprend un bras de préhension (15) qui pivote à son tour par rapport à un levier (17) possédant une portion d'extrémité qui pivote par rapport à un maneton (18), ledit maneton (18) pivotant à son tour par rapport à une portion de tête d'une bielle (20) dont la portion de base est associée, en fonctionnement, au dit ensemble percolateur (9).
